# EUROPEAN PATENT APPLICATION

(11) **EP 4 116 918 A1**
(43) Date of publication of application: **11.01.2023**
(21) Application number: 20923475.6
(22) Date of filing: 16.12.2020
(51) Int. Cl.: G06Q 50/10

(54) **MATCHING SYSTEM, MATCHING METHOD, AND MATCHING PROGRAM**

(30) Priority: 06.03.2020 JP 2020039151
(71) Applicant: OMRON Corporation, Kyoto 600-8530 (JP)
(72) Inventor: MA, Jiaxin, Tokyo 113-0033 (JP); IJIRI, Yoshihisa, Kyoto-shi, Kyoto 600-8530 (JP)
(74) Representative: Mewburn Ellis LLP
(86) International application number: PCT/JP2020/046960
(87) International publication number: WO 2021/176795

(57) **Abstract**

A technique capable of implementing more efficient connection between users is provided. A matching system includes: storage means configured to hold a question set including a plurality of questions; acquisition means configured to present one or more questions included in the question set to a user and acquires one or more answers to the presented questions from the user; first matching processing means configured to execute first matching processing based on one or more questions answered by the user; and second matching processing means configured to execute second matching processing based on content of one or more answers included in the one or more answers from the user when a result of the first matching processing satisfies a first determination condition.

## Description

### TECHNICAL FIELD

The present invention relates to a matching system, a matching method, and a matching program.

### BACKGROUND ART

For example, when users are linked for the purpose of employment support, social network formation, encounter support, or the like, it is preferable to grasp the user's liking, preference, personality, aptitude, interest, or the like. There is a demand for a technique for easily associating users based on the user's liking, preference, personality, aptitude, interest, and the like.

As the technique for grasping the user's liking, preference, and the like, Japanese Patent Laying-Open No. 2001-067400 (PTL 1) discloses a communication device or the like capable of performing matching (approach) with preference information for people existing in the same time space. In Japanese Patent Laid-Open No. 2001-067400 (PTL 1), a question stored in a question item storage is displayed on a man-machine interface screen, and the user answers the question to input personal liking and preference information.

As a technique for exchanging knowledge information in which such a question and an answer to the question are combined, Japanese Patent Laid-Open No. 2002-049786 (PTL 2) discloses an information exchange mediating technique that maintains anonymity of a question person and an answer person, enables all automatic connections to e-mail, chat, analog telephone, and VoIP telephone calls to be used, and further enables the answer person to modify the selection of response means and the current acceptance or rejection as needed. Similarly, Japanese Patent Laid-Open No. 2013-016054 (PTL 3) discloses a technique for exemplifying a question suitable for a category according to a keyword for a question answer type content.

In addition, as a technique for automatically creating questions, Japanese Patent Laid-Open No. 2004-287745 (PTL 4) discloses a technique for automatically producing a questionnaire including a question group matching attribute information of an answering person, and producing a questionnaire capable of transitioning to a lower detailed question according to an answer in each question group and collecting detailed answers.

### CITATION LIST

### PATENT LITERATURES

PTL 1: Japanese Patent Laying-Open No. 2001-067400
PTL 2: Japanese Patent Laying-Open No. 2002-049786
PTL 3: Japanese Patent Laying-Open No. 2013-016054
PTL 4: Japanese Patent Laying-Open No. 2004-287745

### SUMMARY OF INVENTION

### TECHNICAL PROBLEM

In the communication device disclosed in Japanese Patent Laying-Open No. 2001-067400 (PTL 1), matching is performed based on answers to a plurality of predefined questions. The user needs to answer all of the plurality of predefined questions, and there is a problem that the user's trouble is large. Furthermore, because the predefined question does not reflect the potential hobby, taste, personality, aptitude, interest, and the like of the target user, it is difficult to generate various models of the user.

One object of the present invention is to provide a technique capable of implementing more efficient connection between users.

### SOLUTION TO PROBLEM

A matching system according to an example of the present invention includes: storage means configured to hold a question set including a plurality of questions; acquisition means configured to present one or more questions included in the question set to a user and to acquire one or more answers to the presented questions from the user; first matching processing means configured to execute first matching processing based on one or more questions answered by the user; and second matching processing means configured to execute second matching processing based on content of one or more answers included in the one or more answers from the user when a result of the first matching processing satisfies a first determination condition.

According to this configuration, the possibility of matching can be evaluated by focusing on the question(s) arbitrarily selected and answered by each user in the first matching processing, and the possibility of matching can be evaluated by focusing on the content of the answer(s) included in the answer(s) from each user in the second matching processing, so that the possibility of association between the users can be more efficiently estimated. Each user only needs to answer the question that the user wants to answer, but does not need to answer all the presented questions.

The first matching processing means may evaluate similarity between the one or more questions answered by the user and one or more questions answered by another user, and the second matching processing means may evaluate similarity between the content of the one or more answers included in the one or more answers from the user and the content of the one or more answers included in one or more answers from the other user.

According to this configuration, the similarity of the questions answered by the respective users is evaluated in the first matching processing, so that a user group having the high possibility that the objects of interest are similar can be extracted. Furthermore, the similarity of the contents of the answers from the respective users is evaluated in the second matching processing, the user having the high possibility of having similar values and preferences in the user group having the high possibility of having similar interest targets can be estimated.

The first matching processing means may extract another user in which the result of the first matching processing satisfies the first determination condition from among the plurality of other users.

According to this configuration, when the large number of users exists, candidates can be narrowed down to a certain extent to improve the matching processing in the first matching processing.

The second matching processing means may calculate a matching score for the extracted user by the first matching processing.

According to this configuration, the possibility of matching between the users can be objectively evaluated using the matching score.

The first matching processing means may evaluate the similarity based on a number of matched questions between the one or more questions answered by the user and the one or more questions answered by the other user.

According to this configuration, how many questions match among the questions answered by the respective users are evaluated, so that the processing can be simplified.

The first matching processing means may evaluate the similarity based on mapping to a latent space calculated from one or more questions answered by the user and mapping to a latent space calculated from one or more questions answered by another user.

According to this configuration, even when the number of questions answered by each user is not the same, the similarity can be evaluated using a common index of the mapping to the latent space.

The question set may have a hierarchical structure. At least one of the first matching processing means and the second matching processing means may perform logical inference from the question from which the answer is acquired, based on the hierarchical structure of the question set.

At this point, for example, the logical inference includes processing for inferring and interpolating information suitable for the matching processing from the acquired answer by referring to information included in the hierarchical structure of the question set. According to this configuration, even when the number of answered questions is relatively small, more accurate evaluation can be implemented using the hierarchical structure included in the question set. For example, the users who have answered another question belonging to a common category can also be evaluated as a relatively high possibility of matching.

The question included in the question set may be categorized by a category. The matching system may further include update means configured to receive the question produced by a user and to update the question set.

According to this configuration, the question set can be sequentially updated using the new question produced by the user.

The update means may determine the category to which an added question belongs. According to this configuration, the question set can be sequentially updated at small cost.

The update means may execute at least one of processing for updating the question set by collecting the added question and a question similar to the added question and processing for updating the question set with a representative question corresponding to the added question based on the similarity between the added question and another question.

According to this configuration, the question set can be prevented from being excessively subdivided.

The acquisition means may distribute the question set only to the user in which the category of the question matches a range of interest previously registered by the user or an estimated range of interest.

According to this configuration, a possibility of acquiring the answer from the user can be increased.

The matching system may further include a learned model configured to determine the user to which the question is distributed or to determine the question delivered to the user so as to maximize an answer rate from the user.

According to this configuration, the user who distributes the question set or the question distributed to the user can be optimized so as to maximize the answer rate from the user by machine learning.

At least one of the first matching processing means and the second matching processing means may give a weight related to matching processing to the question included in the question set. In addition, at least one of the first matching processing means and the second matching processing means may give a weight related to matching processing to the answer acquired from the user. Furthermore, the weight related to the matching processing may be determined depending on a time of a target question or a time of a target answer.

According to these configurations, the possibility of acquiring an evaluation result suitable for the purpose can be more increased.

The matching system may further include notification means configured to notify another user in which the result of the second matching processing satisfies a second determination condition as a matching result.

According to this configuration, each user can easily connect with another user having a hobby, taste, personality, aptitude, interest, or the like in common with the user.

A matching method executed by a computer, the matching method includes: presenting one or more questions included in a question set including a plurality of questions to a user and acquiring one or more answers to the presented questions from the user; executing first matching processing based on one or more questions answered by the user; and executing second matching processing based on content of one or more answers included in the one or more answers from the user when a result of the first matching processing satisfies a first determination condition.

According to still another example of the present invention, a matching program executing the matching method is provided. The matching program causes a computer to execute: presenting one or more questions included in a question set including a plurality of questions to a user and acquiring one or more answers to the presented questions from the user; executing first matching processing based on one or more questions answered by the user; and executing second matching processing based on content of one or more answers included in the one or more answers from the user when a result of the first matching processing satisfies a first determination condition.

### ADVANTAGEOUS EFFECTS OF INVENTION

According to the present invention, a technique capable of implementing more efficient connection between users can be provided.

### BRIEF DESCRIPTION OF DRAWINGS

Fig. 1 is a schematic diagram illustrating an application example of a matching method according to an embodiment.
Fig. 2 is a schematic diagram illustrating a configuration example of a matching system of the embodiment.
Fig. 3 is a schematic diagram illustrating a hardware configuration example of a server included in the matching system of the embodiment.
Fig. 4 is a schematic diagram illustrating a hardware configuration example of a terminal device included in the matching system of the embodiment.
Fig. 5 is a sequence diagram illustrating an outline of matching processing in the matching system of the embodiment.
Fig. 6 is a schematic diagram illustrating a configuration example of a question set used in the matching system of the embodiment.
Fig. 7 is a schematic diagram illustrating an example of a set of an answered question and an answer content used in the matching system of the embodiment.
Fig. 8 is a schematic diagram illustrating an example of a data structure of a question used in the matching system of the embodiment.
Fig. 9 is a view illustrating a processing outline of an evaluation phase in the matching system of the embodiment.
Fig. 10 is a view illustrating one technique of first matching processing (selection question matching) in the matching system of the embodiment.
Fig. 11 is a view illustrating an example of an evaluation result of a matching score calculated by a technique of the first matching processing (selection question matching) in Fig. 10.
Fig. 12 is a view illustrating another technique of the first matching processing (selection question matching) in the matching system of the embodiment.
Fig. 13 is a view illustrating still another technique of the first matching processing (selection question matching) in the matching system of the embodiment.
Fig. 14 is a view illustrating one technique of second matching processing (answer content matching) in the matching system of the embodiment.
Fig. 15 is a view illustrating still another technique of the second matching processing (answer content matching) in the matching system of the embodiment.
Fig. 16 is a schematic diagram illustrating another configuration example of the matching system of the embodiment.

### DESCRIPTION OF EMBODIMENT

With reference to the drawings, an embodiment of the present invention will be described in detail. The same or equivalent portion in the drawings is denoted by the same reference numeral, and the description will not be repeated.

### <A. Application example>

An example of a scene to which the present invention is applied will be described.

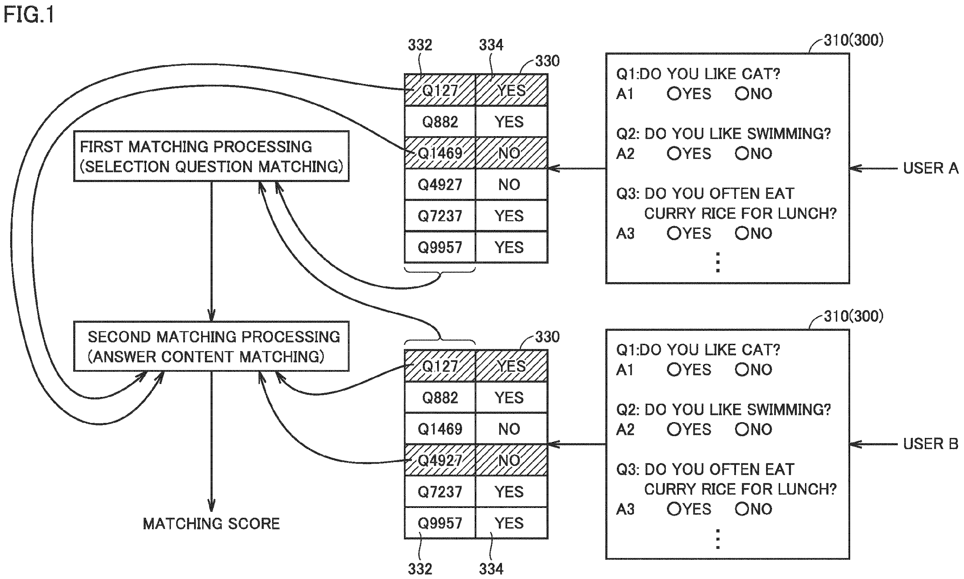

Fig. 1 is a schematic diagram illustrating an application example of a matching method according to an embodiment. With reference to Fig. 1, a matching system of the embodiment holds a question set 300 including a plurality of questions 310. The plurality of questions 310 included in question set 300 may be classified by a category.

The matching system presents one or more questions 310 included in question set 300 to one or more users, and acquires one or more answers to the presented questions from the users.

The example in Fig. 1 illustrates an example in which one or more questions 310 included in question set 300 are presented to two users (a user A and a user B). The presentation of question 310 may be in the form of a list, or be switched or scrolled by a predetermined number.

Each user selects and answers some or all of presented questions 310. As illustrated in Fig. 1, the answer from each user may be acquired in the form of an answer data set 330 including a question ID 332 specifying the plurality of questions 310 answered by the user and an answer content 334 for each question 310.

The matching system executes first matching processing ("selection question matching" to be described later) based on one or more questions answered by the user. In the first matching processing, information about question ID 332 included in answer data set 330 is used.

Subsequently, when a result of the first matching processing satisfies a first determination condition, second matching processing ("answer content matching" to be described later) is executed based on the content of one or more answers included in the one or more answers from the user. In the second matching processing, information about answer content 334 for a specific question 310 included in answer data set 330 is used.

Finally, the matching system calculates a matching score between users satisfying a predetermined determination condition. In the present specification, the "matching score" is a term including an index indicating a matching degree or an adaptation degree between a certain reference user and another user (including both a real user and a virtual user). Alternatively, the "matching score" can also be referred to as an index indicating congeniality (including a potential case) between users. The "matching score" may be a value in any range, a scalar value, or a vector value.

As illustrated in Fig. 1, the matching system of the embodiment can find a combination of users having the high matching score in a small number of calculation resources and in a short time even in the case where a large number of users exists by adopting two-stage matching processing.

### <B. Configuration example of matching system>

A configuration example of the matching system of the embodiment will be described below.

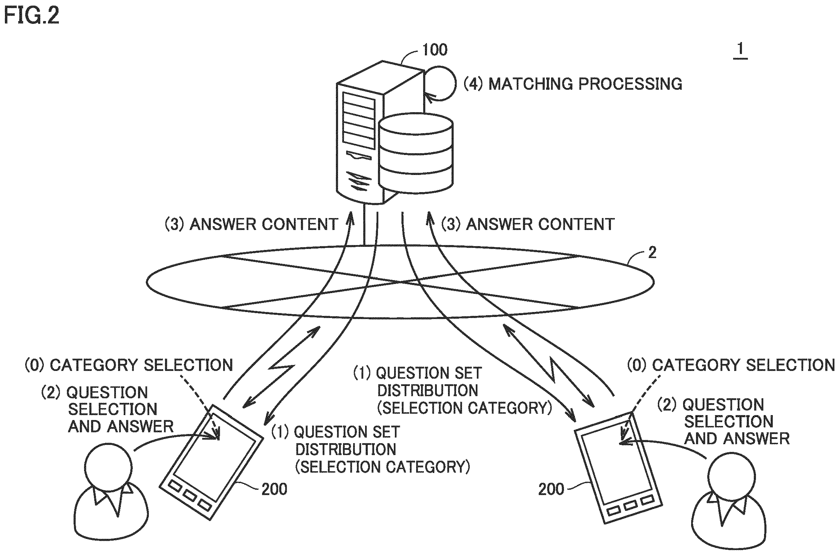

Fig. 2 is a schematic diagram illustrating a configuration example of a matching system 1 of the embodiment. With reference to Fig. 2, matching system 1 includes a server 100 in charge of main processing related to matching, and one or more terminal devices 200 connectable to server 100 through network 2. As described later, the present invention is not limited to what is called a server client format including server 100 and terminal device 200, but may be implemented using any format.

In matching system 1, the matching processing for linking the users typically includes the following procedure.

First, a question set including a plurality of questions is distributed from server 100 to each of one or more terminal devices 200 ((1) question set distribution). In each of terminal devices 200, the user selects some or all of the plurality of distributed questions and inputs the answer ((2) question selection and answer). The content of the answer input from the user through each of terminal devices 200 is transmitted to server 100 ((3) answer content).

A question set may be provided from terminal device 200 to server 100 in a Web base. In this case, server 100 holds the question set to be accessible from any terminal device 200, and stores the answer input from terminal device 200. When such a configuration is adopted, the entire question set is not required to be transmitted from server 100 to terminal device 200.

Server 100 executes the matching processing for calculating the adaptation degree and the like between the users based on the answer content from each of terminal devices 200 ((4) matching processing). Server 100 may transmit the result of the matching processing to each of terminal devices 200 as necessary. Details of the matching processing executed by server 100 will be described later.

In addition to or instead of the configuration example in which the user passively answers the question set distributed from server 100, the category in which the user itself who is scheduled to answer is interested may be selected ((0) category selection), and server 100 may distribute the question belonging to the selected category in the questions included in the question set ((1) question set distribution (selected category)). Matching accuracy can be improved by adopting the configuration in which the user actively answers.

### <C. Hardware configuration example>

Hardware configuration examples of server 100 and terminal device 200 that are included in the matching system of the embodiment will be described below.

### (c1: Server 100)

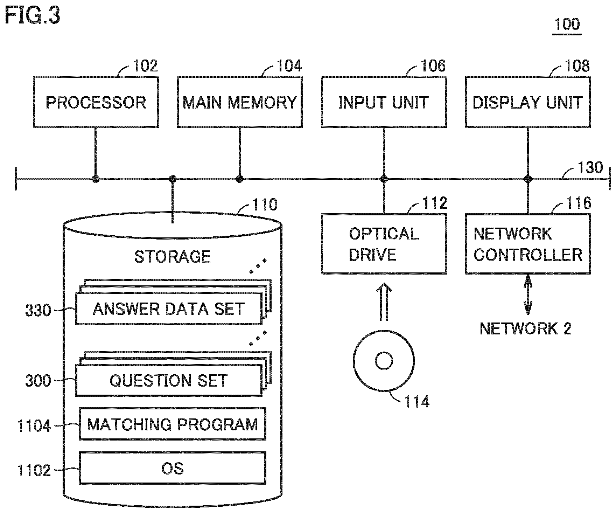

Fig. 3 is a schematic diagram illustrating the hardware configuration example of server 100 included in matching system 1 of the embodiment. As an example, server 100 may be implemented using hardware (for example, a general-purpose computer) according to a general-purpose architecture.

With reference to Fig. 3, server 100 includes a processor 102, a main memory 104, an input unit 106, a display unit 108, a storage 110, an optical drive 112, and a network controller 116. These components are electrically connected to each other through a processor bus 130.

Processor 102 includes a central processing unit (CPU) and a graphics processing unit (GPU), and reads a program (as an example, an operating system (OS) 1102 and a matching program 1104) stored in storage 110, and develops and executes the program in main memory 104, thereby implementing various processes as described later.

Main memory 104 includes a dynamic random access memory (DRAM) and a static random access memory (SRAM). For example, storage 110 includes a nonvolatile storage device such as a hard disk drive (HDD) or a solid state drive (SSD).

Storage 110 stores an OS 1102 implementing basic functions and a matching program 1104 executing the matching processing to be described later. Storage 110 may further store distributed question set 300. That is, storage 110 corresponds to a storage that holds question set 300.

Input unit 106 includes a keyboard and a mouse, and receives a user operation. Display unit 108 includes a display, various indicators, and a printer, and outputs a processing result from processor 102 and the like.

Server 100 includes optical drive 112, and a computer-readable instruction code non-transiently corresponding to a computer-readable program stored a storage medium 114 (for example, an optical storage medium such as a digital versatile disc (DVD)) in which the computer-readable program is non-transiently stored is read from storage medium 114, and installed in storage 110 or the like.

Matching program 1104 and the like executed by server 100 may be installed through computer-readable storage medium 114, or installed by being downloaded from the server device or the like on the network. In addition, sometimes the function provided by server 100 of the embodiment is implemented using a part of the module provided by the OS.

Network controller 116 exchanges data with an arbitrary information processing device such as terminal device 200 through network 2.

### (c2: Terminal device 200)

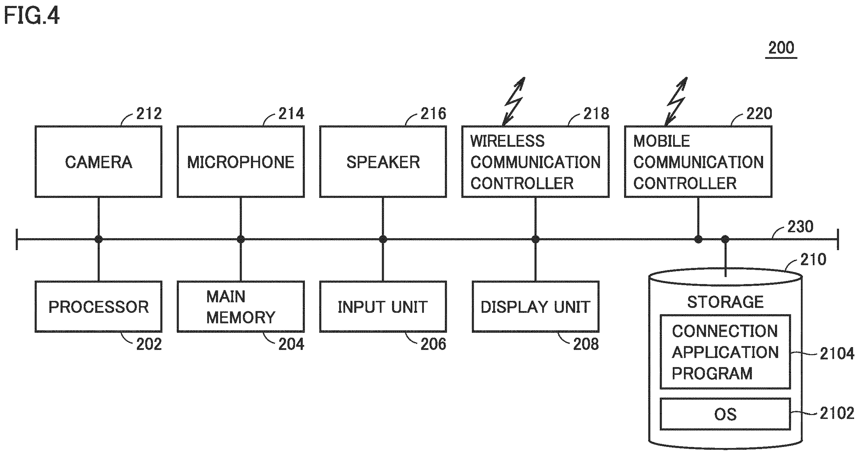

Fig. 4 is a schematic diagram illustrating the hardware configuration example of terminal device 200 included in matching system 1 of the embodiment. Terminal device 200 may be implemented using a general-purpose computer according to a general-purpose architecture. For example, terminal device 200 may be embodied in a form such as a smartphone, a tablet, or a notebook computer.

With reference to Fig. 4, terminal device 200 includes a processor 202, a main memory 204, an input unit 206, a display unit 208, a storage 210, a camera 212, a microphone 214, a speaker 216, a wireless communication controller 218, and a mobile communication controller 220. These components are electrically connected to each other through a processor bus 230.

Processor 202 includes a CPU or a GPU, and reads a program (as an example, an OS 2102 and a connection application program 2104) stored in storage 210, expands the program in main memory 204, and executes the program, thereby implementing various pieces of processing as described later.

Connection application program 2104 displays the plurality of questions (question set 300) distributed from server 100 and provides a screen interface receiving the answer input by the user. A browser application may be employed as the connection application program 2104.

Main memory 204 includes a volatile storage device such as a DRAM or an SRAM. For example, storage 210 includes a non-volatile storage device such as an HDD or an SSD.

Storage 210 stores OS 2102 and connection application program 2104 in order to implement the basic function.

Input unit 206 includes a touch panel, operation keys, a keyboard, and a mouse, and receives the user operation. Display unit 208 includes a liquid crystal display or an organic electro luminescence (EL) display, and outputs a processing result and the like from processor 202. Camera 212 captures a still image or a moving image in a field of view. Camera 212 may be disposed on any outer surface of terminal device 200. Microphone 214 converts arbitrary sound into an electric signal. Speaker 216 generates a voice in response to a command from processor 202 or the like.

Wireless communication controller 218 is an interface exchanging data with server 100 and the like through network 2. A wireless communication module such as a wireless local area network (LAN) or Bluetooth (registered trademark) may be employed as wireless communication controller 218.

Mobile communication controller 220 is an interface that connects to the Internet or the like through a wide area wireless communication network and exchanges data with server 100 or the like. A wireless communication module such as long term evolution (LTE) or WiMAX may be adopted as mobile communication controller 220.

### <D. Outline of matching processing>

An outline of the matching processing in matching system 1 of the embodiment will be described below.

### (d1: Processing procedure)

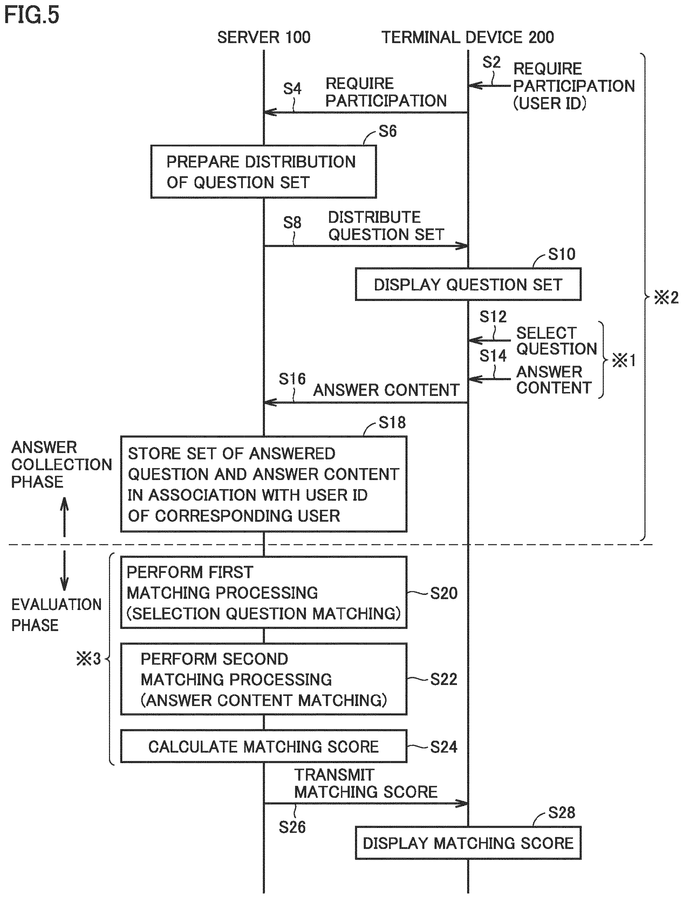

Fig. 5 is a sequence diagram illustrating the outline of the matching processing in matching system 1 of the embodiment. Typically, the processing procedure in Fig. 5 may be implemented by processor 102 of server 100 executing matching program 1104 (see Fig. 3) and processor 202 of terminal device 200 executing connection application program 2104 (see Fig. 4) according to the user operation.

The processing procedure in Fig. 5 includes an answer collection phase (steps S2 to S18) and an evaluation phase (steps S20 to S28). Although the answer collection phase and the evaluation phase are collectively described in Fig. 5 for convenience of description, each phase can be independently executed. For example, the evaluation phase may not be executed immediately after the execution of the answer collection phase. That is, the evaluation phase may be executed independently of the execution of the answer collection phase. In addition, the answer collection phase may also be executed independently for each user.

With reference to Fig. 5, one of the users inputs a participation request to the matching process to own terminal device 200 (step S2). At this point, each user explicitly or implicitly inputs a user ID (hereinafter, referred to as a "subject ID") that is identification information identifying the user. The user ID is sufficient as long as it is information that can identify each user from other users, and may not be information that can specify personal information about each user. Terminal device 200 transmits the participation request input by the user to server 100 (step S4).

In response to the participation request of the user from any one of terminal devices 200, server 100 prepares the distribution of question set 300 including the plurality of questions to be provided to the target user (step S6). Then, server 100 distributes prepared question set 300 to terminal device 200 (step S8).

Terminal device 200 displays question set 300 distributed from server 100 on display unit 208 or the like (step S10). The user selects any one of the plurality of questions (question set 300) displayed on display unit 208 or the like of terminal device 200 (step S12), and inputs the answer to the selected question (step S14). The pieces of processing of steps S12 and S14 are repeated by the number of questions selected and answered by the user (repetition of ^{∗}1).

Finally, terminal device 200 transmits the content of answers to one or more questions answered by the user to server 100 (step S16).

Upon receiving the answer content from terminal device 200, server 100 stores a set of the answered question and the answer content in association with the user ID of the corresponding user (step S18). The set of the answered question and the answer content may be stored after being characterized.

In this manner, server 100 presents the user with one or more questions 310 included in question set 300, and executes acquisition processing for acquiring the answer to question 310 from the user.

The answer collection phase (steps S2 to S18) is repeated by the number of users who input the participation request (repetition of ^{∗}2).

As described above, when the answer contents from the plurality of users are collected, server 100 executes processing of the evaluation phase (steps S20 to S28).

More specifically, server 100 executes the first matching processing (hereinafter, also referred to as "selection question matching") based on one or more questions selected and answered by the user (step S20). In the first matching processing (selection question matching), server 100 extracts a set of users satisfying a predetermined first determination condition. Typically, server 100 searches for the set of users having similar patterns of selected and answered questions (that is, the position of the question in question set 300).

Subsequently, server 100 executes the second matching processing (hereinafter, also referred to as "answer content matching") based on the answer content for the extracted set of users (step S22). In the second matching processing (answer content matching), server 100 extracts the set of users satisfying a predetermined second determination condition. Typically, server 100 searches for the users having similar answer contents to the selected question or similar feature amounts indicating the answer contents.

The pieces of processing of steps S20 and S22 are repeated according to the number of users who have answered the question (repetition of ^{∗}3).

As described above, when the result of the first matching processing satisfies the first determination condition, server 100 executes the second matching processing based on the content of the answer included in the answer from the user.

Finally, server 100 calculates a matching score based on the result of the second matching processing (step S24). Server 100 transmits all or a part of the calculated matching score to terminal device 200 as necessary (step S26). The matching score calculated by server 100 may be transmitted not to terminal device 200 but to a high-level server or the like.

When receiving the matching score from server 100, terminal device 200 displays the received matching score on display unit 208 or the like (step S28).

Thus, the execution of the processing procedure in matching system 1 is completed.

As the screen interface provided to the user, only the matched user may be presented after the first matching processing (selection question matching) (step S20). After the second matching processing (answer content matching) (step S22), the extracted users may be displayed side by side in order of the corresponding matching scores. The matching score may be displayed as a numerical value, or a discrete expression indicating strength (strong or weak) of the matching may be adopted (for example, as the matching score is larger, the user face and icons are displayed closer to each other).

In the first matching processing (selection question matching) (step S20), all the pieces of processing may not be executed. That is, the matching result that is determined by processing up to a certain stage and is rough to some extent may be output. In this case, the output order and the display mode indicating the strength of the matching may be determined based on the processing result in the remaining processing.

When the result is output in the middle of the processing of the first matching processing (selection question matching), the processing result in the remaining processing of the first matching processing (selection question matching) may be reflected in the second matching processing (answer content matching) in the subsequent stage.

In this manner, the first matching processing (selection question matching) (step S20) and the second matching processing (answer content matching) (step S22) can be combined in an arbitrary mode.

### (d2: Question set)

An example of question set 300 used in matching system 1 of the embodiment will be described below.

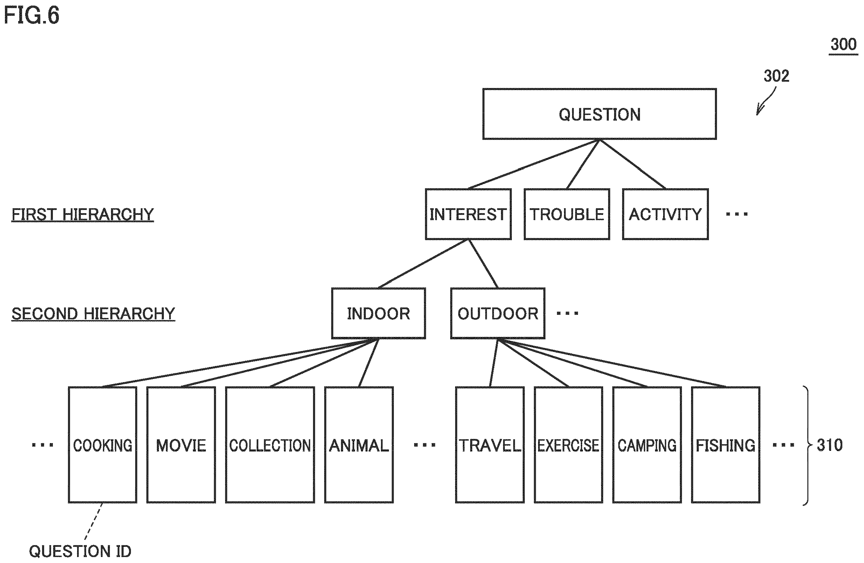

Fig. 6 is a schematic diagram illustrating a configuration example of question set 300 used in matching system 1 of the embodiment. With reference to Fig. 6, question set 300 includes the plurality of questions 310 classified by the category. The question ID that is identification information specifying each question 310 in question set 300 is assigned to each question 310.

Question set 300 in Fig. 6 is configured based on a category tree 302 having a hierarchical structure of a plurality of categories, and each of questions 310 belongs to any of the hierarchical categories. In this way, question set 300 has the hierarchical structure.

Although Fig. 6 illustrates an example of category tree 302 having the first hierarchy and the second hierarchy, category tree 302 having more or less hierarchies may be adopted. Question 310 may belong to the plurality of categories instead of the single category. Furthermore, all questions 310 may not belong to the category (in the example of Fig. 6, the second layer) of the same hierarchy, but for example, some of questions 310 may belong to the category of the first hierarchy.

Although Fig. 6 illustrates the example of question set 300 (that is, hierarchized question set 300) classified by the category, each of questions 310 may not be classified into the specific category. In other words, question set 300 including the plurality of questions 310 may be adopted.

### (d3: Answer collection phase)

An example of the set of the answered questions and the answer content collected in the answer collection phase in Fig. 5 will be described below.

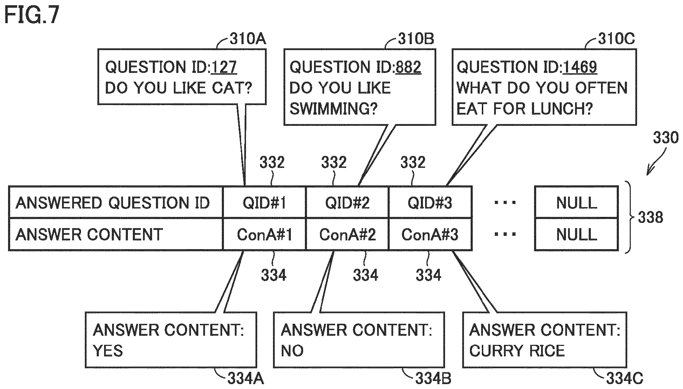

Fig. 7 is a schematic diagram illustrating the example of the set of an answered question and the answer content used in matching system 1 of the embodiment. With reference to Fig. 7, server 100 collects and stores answer data set 330 of question 310 answered by the user and the answer content to question 310.

Answer data set 330 includes one or more question IDs 332 specifying one or more questions 310 answered by the user and answer content 334 for each question 310. That is, answer data set 330 includes at least a part of sets of associated question ID 332 and answer content 334.

Because answer data set 330 may include any number of sets of question IDs 332 and answer contents 334, a NULL code 338 may be finally added in order to clarify the number of included sets.

Fig. 7 illustrates the example of answer data set 330 collected and stored in the case where the user answers a question 310A to which "127" is given as the "question ID", a question 310B to which "882" is given as the "question ID", and a question 310C to which "1469" is given as the "question ID".

The question content of question 310A is "do you like cats?", and answer content 334A to this question is "yes". The question content of question 310B is "do you like swimming?", and answer content 334B to this question is "no". The question content of question 310C is "what do you often eat for lunch?", and answer content 334C to this question is "curry rice".

As illustrated in Fig. 7, the question may be a closed question that limits an answer range such as yes / no as illustrated in question 310A and question 310B, or be an open question that receives arbitrary content from the user as the answer as illustrated in question 310C.

When the open question is received as the answer, a feature amount may be calculated from the answer content, and similarity of the answer may be evaluated. Word2vec, bidirectional encoder representations from transformers (BERT) (https://arxiv.org/abs/1810.04805), or the like can be used as a technique of calculating the feature amount from the answer content.

Naturally, the question is not limited to the one in Fig. 7, but any content can be adopted. In response to such diversity of questions, the answer content may also accept arbitrary content.

Fig. 7 illustrates the simplified example of the set of including question ID 332 and corresponding answer content 334 for convenience of the description, and information specifying the hierarchical structure of question set 300 may be included for a large-scale question stored in matching system 1.

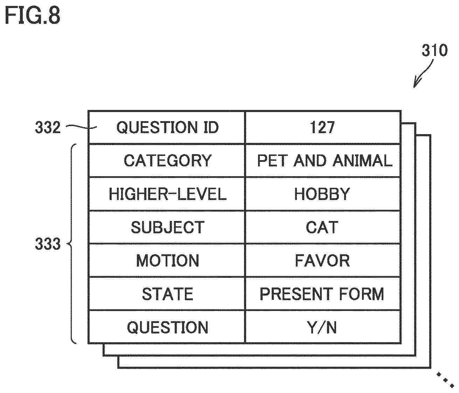

Fig. 8 is a schematic diagram illustrating an example of a data structure of question 310 used in matching system 1 of the embodiment. With reference to Fig. 8, each of questions 310 includes question ID 332 and attribute information 333 about question 310. Attribute information 333 includes information about the category to which question 310 belongs and an upper category of the category to which the question belongs. Attribute information 333 may include information indicating the content of question 310 or a question format.

By adopting question set 300 having the data structure as illustrated in Fig. 8, the hierarchical structure of question set 300 can be appropriately defined even when a large number of questions 310 are stored.

### (d4: Evaluation Phase)

An example of matching processing using answer data set 330 in the evaluation phase of Fig. 5 will be described below.

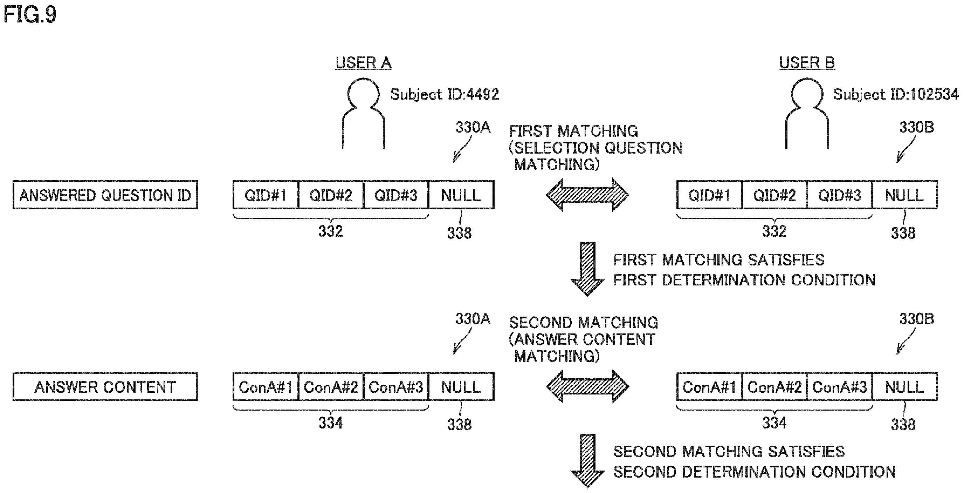

Fig. 9 is a view illustrating a processing outline of the evaluation phase in matching system 1 of the embodiment. In the evaluation phase, two-stage matching (selection question matching and answer content matching) is executed.

In the first matching processing (selection question matching), server 100 evaluates the adaptation degree between the users based on one or more questions selected and answered by the users. That is, in the first matching processing (selection question matching), server 100 evaluates the similarity between the one or more questions answered by the user and one or more questions answered by another user.

For example, server 100 performs the first matching processing based on one or more question IDs 332 included in an answer data set 330A obtained from user A and one or more question IDs 332 included in an answer data set 330B obtained from user B. At this point, server 100 extracts (a set of) another user in which the result of the first matching processing satisfies the first determination condition in the plurality of other users.

Subsequently, in the second matching processing (answer content matching), server 100 evaluates the adaptation degree between the users based on the answer content to the selected question for the set of users extracted by the first matching processing. That is, in the second matching processing (answer content matching), server 100 evaluates the similarity between the content of the one or more answers included in the one or more answers from the user and the content of one or more answers included in the one or more answers from another user.

For example, server 100 performs the second matching processing based on answer content 334 for one or more questions 310 included in answer data set 330A obtained from user A and answer content 334 for one or more questions 310 included in answer data set 330B obtained from user B. At this time, server 100 may calculate the matching score for the extracted user extracted by the first matching processing. Then, server 100 extracts the set of users in which the result of the second matching processing (for example, a matching score) satisfies the second determination condition.

Furthermore, server 100 may execute notification processing for notifying another user in which the result of the second matching processing satisfies the second determination condition as the matching result. That is, when extracting the set of users in which the result of the second matching processing satisfies the second determination condition, server 100 may provide information that can identify another user included in the set to the users included in the extracted set of users.

In the two-stage matching processing (selection question matching and answer content matching), not only the matching score between the actual users is calculated, but also the matching score between the target user and a previously-assumed virtual user may be calculated. In this case, it is sufficient that a plurality of typical virtual users classified from some viewpoint is assumed, and that an answer pattern that each virtual user will answer is previously prepared.

Any technique can be adopted for the first matching processing and the second matching processing. A specific example of a technique adopted as the first matching processing and the second matching processing will be described below.

### <E. First matching processing (selection question matching)>

Some specific techniques of the first matching processing (selection question matching) included in the evaluation phase of Fig. 5 will be described below.

### (e1: Matching technique 1)

The number of matches (the number of overlaps) of question ID 332 included in answer data set 330 may be evaluated as the technique of the first matching processing (selection question matching).

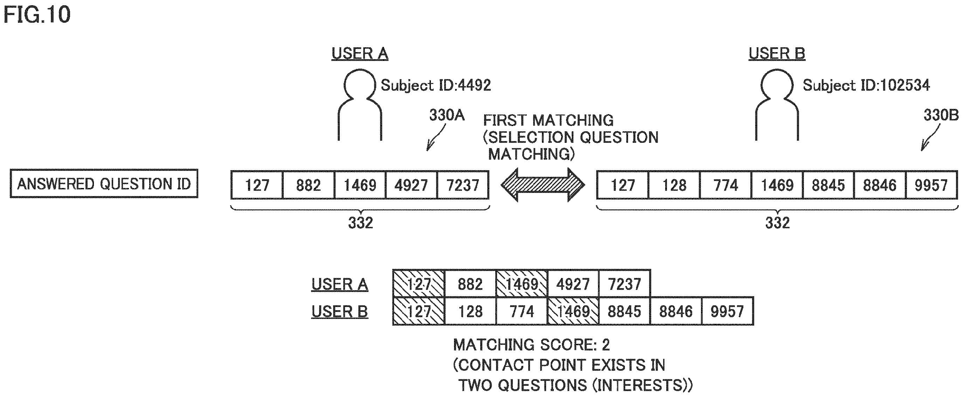

Fig. 10 is a view illustrating one technique of the first matching processing (selection question matching) in matching system 1 of the embodiment. With reference to Fig. 10, in the plurality of users, the number of matches (the number of overlaps) of question IDs 332 included in answer data set 330 of each user is calculated as the matching score.

In the example of Fig. 10, answer data set 330A obtained from user A (subject ID: 4492) includes five question IDs 332, and answer data set 330B obtained from user B (subject ID: 102534) includes seven question IDs 332. When the overlapping of question ID 332 is evaluated, it can be seen that the two values "127" and "1469" of question ID 332 match (overlap) with each other. Because two question IDs 332 match with each other, the matching score can be calculated as "2".

When the matching score is "2", it can be estimated that a contact point exists between two questions (interests) between the target users.

As described above, in the first matching processing (selection question matching), the similarity is evaluated based on the number of matching questions between one or more questions answered by a certain user and one or more questions answered by another user.

The matching score in Fig. 10 can be calculated between arbitrary users. Although Fig. 10 illustrates the example of calculating the matching score between two users, the matching score may be calculated between at least three users.

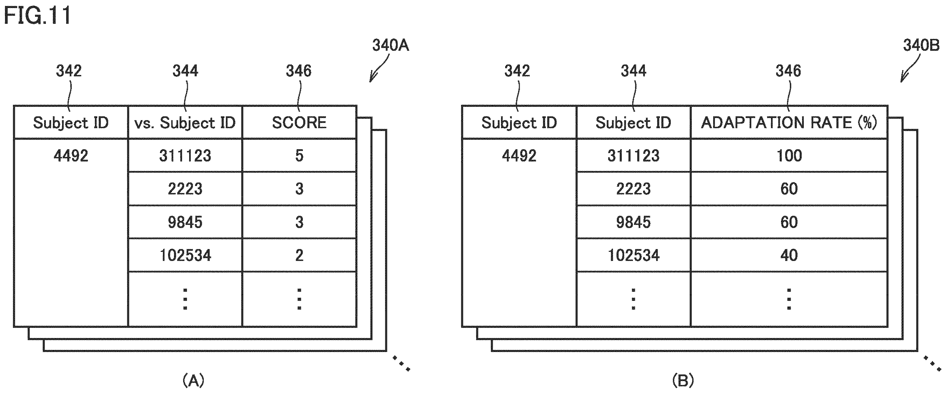

Fig. 11 is a view illustrating an example of an evaluation result of the matching score calculated by the technique of the first matching processing (selection question matching) in Fig. 10. As illustrated in Figs. 11(A) and 11(B), the adaptation degree with another user may be calculated for each user. A weight as described later may be adopted for the calculation of the adaptation degree.

Fig. 11(A) illustrates the result of ranking other users in the order of indicating the high matching score with respect to the reference user for the reference user as an evaluation result 340A of the first matching processing. More specifically, evaluation result 340A includes a reference user field 342, a high-ranking user field 344 that defines the user ID of the user indicating the high matching score for the user with the user ID defined in reference user field 342, and a matching score field 346 that defines the value of the matching score calculated for the reference user.

Related information related to a high-ranking user may be displayed in further association with each other.

Fig. 11(B) illustrates an example of calculating a match rate indicating how many questions match in the questions selected by the reference user. That is, the match rate = the number of questions that match with other users) / (the total number of questions selected by the reference user) can be calculated.

Regarding the reference user, the result of ranking other users in order of illustrating the high match rate with respect to the reference user is illustrated in an evaluation result 340B of the first matching processing in Fig. 11(B). More specifically, evaluation result 340B includes reference user field 342, high-ranking user field 344, and match rate field 348 that defines the value of the match rate calculated for the reference user.

As the first determination condition described above, it is assumed that (1) evaluation results 340A and 340B in Figs. 11(A) and 11(B) are in a predetermined number of ranges from the top (for example, within the top 20), (2) the value of the calculated matching score exceeds a predetermined threshold, and (3) the calculated match rate exceeds a predetermined threshold.

### (e2: Matching technique 2)

The number of matches (the number of overlaps) of the category to which question ID 332 belongs may be evaluated instead of question ID 332 included in answer data set 330 as another technique of the first matching processing (selection question matching). That is, when each user selects different questions belonging to the same category, it can be estimated that the contact points exist with each other with category identity. Such the estimation based on the category identity means logical inference from the question from which the answer is obtained, based on the hierarchical structure of question set 300.

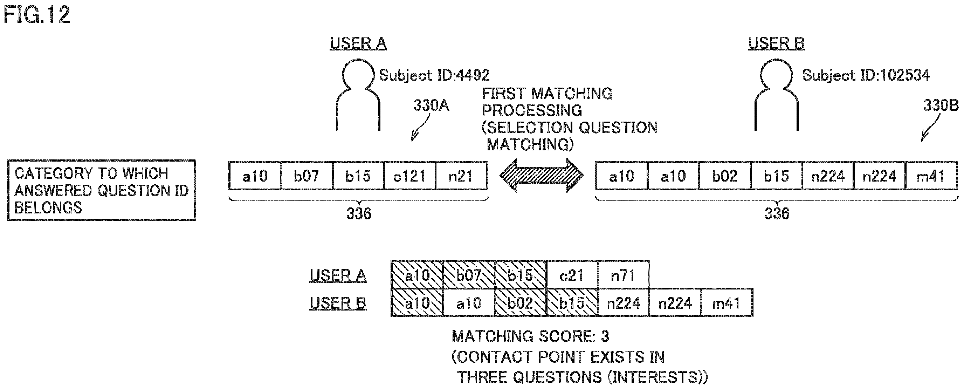

Fig. 12 is a view illustrating another technique of the first matching processing (selection question matching) in matching system 1 of the embodiment. In the method of Fig. 12, a category ID 336 to which question ID 332 included in answer data set 330 of each user belongs is used for the evaluation. Category ID 336 is identification information identifying the category to which each question 310 belongs in question set 300. More specifically, the number of matches (the number of overlaps) of category ID 336 is calculated as the matching score.

In the example of Fig. 12, an answer data set 330A obtained from a user A (subject ID: 4492) includes five questions, and an answer data set 330B obtained from a user B (subject ID: 102534) includes seven questions. The server 100 determines category ID 336 indicating the category to which each question belongs and evaluates the overlap of category ID 336. It is found that three values of category ID 336 of "a10", "b07", and "b15" match (overlap) with each other. Because three category IDs 336 match with each other, the matching score can be calculated as "3".

When the matching score is "3", it can be estimated that the contact point exists in three questions (interests) between the target users.

The matching score in Fig. 12 can be calculated between arbitrary users. Although Fig. 12 illustrates the example of calculating the matching score between two users, the matching score may be calculated between at least three users.

The evaluation result similar to that in Fig. 11 described above can be calculated also in the matching technique of Fig. 12. Because the content of the calculated evaluation result is substantially the same as the content described above, the detailed description will not be repeated.

Furthermore, similarly for the above-described first determination condition, it is assumed that (1) the first determination condition is in a predetermined number of ranges from the top of the ranking (for example, within the top 20), (2) the value of the calculated matching score exceeds a predetermined threshold, and (3) the calculated match rate exceeds a predetermined threshold.

### (e3: Matching technique 3)

As still another method of the first matching processing (selection question matching), The matching score may be calculated based on mapping (alternatively, the feature amount or the feature vector) to a latent space calculated from question ID 332 included in answer data set 330.

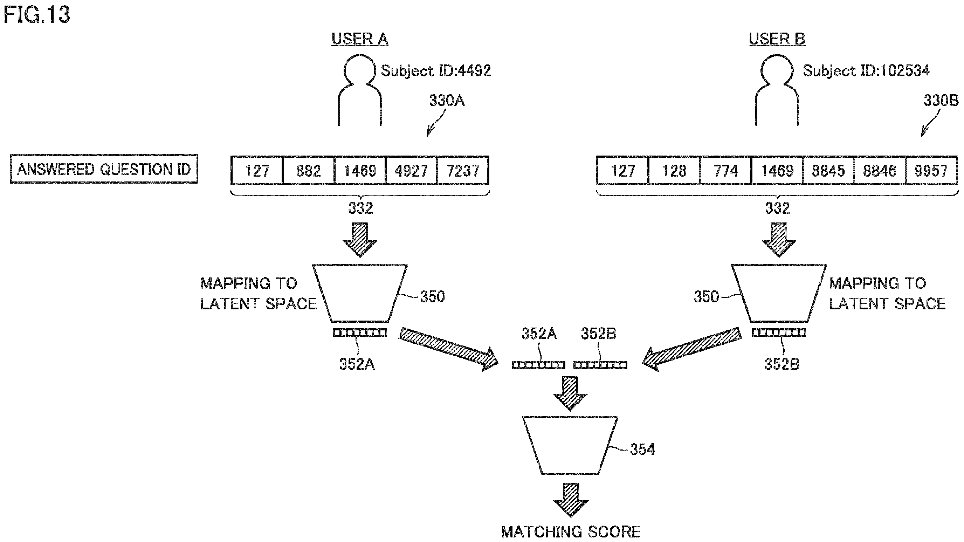

Fig. 13 is a view illustrating still another technique of the first matching processing (selection question matching) in matching system 1 of the embodiment. With reference to Fig. 13, the matching score may be calculated based on mapping 352 to the latent space calculated from question ID 332 included in answer data set 330 of each user in the plurality of users.

In the example of Fig. 13, mapping 352A to the latent space is calculated by inputting five question IDs 332 included in answer data set 330A obtained from user A (subject ID: 4492) to mapping model 350, and mapping 352B to the latent space is calculated by inputting seven question IDs 332 included in answer data set 330B obtained from user B (subject ID: 102534) to mapping model 350.

Then, the matching score can be calculated by evaluating the similarity between mapping 352A to the latent space and mapping 352B to the latent space. For example, a collation model 354 may be used to calculate the matching score.

As described above, in the first matching processing (selection question matching), the similarity is evaluated based on the mapping to the latent space calculated from one or more questions answered by a certain user and the mapping to the latent space calculated from one or more questions answered by another user.

At this point, details of mapping model 350 and collation model 354 will be described. Both mapping model 350 and collation model 354 may be generated by previous learning.

Mapping model 350 may be learned so as to output the feature amount produced based on prior knowledge with respect to the similarity between the categories as mapping 352 to the latent space. Alternatively, mapping model 350 may use an algorithm such as principal component analysis. Furthermore, mapping model 350 may be learned using a neural network or the like.

Collation model 354 may calculate the feature amount indicating the similarity between input mappings 352 (feature amounts) to the plurality of latent spaces.

An index indicating the distance between mappings 352 to the latent space may be used as a method for calculating the matching score. For example, the closer the distance between mappings 352 to the latent space is, the higher the matching score may be evaluated, or it may be evaluated that there is the match when the distance between mappings 352 to the latent space is greater than or equal to a predetermined threshold, and it may be evaluated that there is no match in other cases.

The learning data set in which the actual matching score (or, the degree of subjective satisfaction) is labeled for the set of the question and the answer may be used in the learning for generating mapping model 350 and collation model 354.

The matching score may be calculated using a neural network as collation model 354 after mapping model 350 is designed to output the artificially designed feature amount as mapping 352 to the latent space. Conversely, after mapping model 350 is generated by the learning, calculated mapping 352 (feature amount) to the latent space may be evaluated using an index indicating a predetermined distance.

The matching score in Fig. 13 can be calculated between arbitrary users. Although Fig. 13 illustrates the example of calculating the matching score between two users, the matching score may be calculated between at least three users.

The evaluation result similar to that in Fig. 11 described above can be calculated also in the matching method of Fig. 13. Because the content of the calculated evaluation result is substantially the same as the content described above, the detailed description will not be repeated.

Furthermore, similarly for the above-described first determination condition, it is assumed that (1) the first determination condition is in a predetermined number of ranges from the top of the ranking (for example, within the top 20), (2) the value of the calculated matching score exceeds a predetermined threshold, and (3) the calculated match rate exceeds a predetermined threshold.

### (e4: Matching technique 4)

The number of matches (the number of overlaps) of the category to which question ID 332 belongs instead of question ID 332 included in answer data set 330 may be evaluated in the technique of Fig. 13 as still another technique of the first matching processing (selection question matching). That is, when each user selects different questions belonging to the same category, it can be estimated that the contact points exist with each other with category identity. Such the estimation based on the category identity means logical inference from the question from which the answer is obtained, based on the hierarchical structure of question set 300.

The details of the processing using the category to which question ID 332 belongs are similar to the processing described above in Figs. 12 and 13, and thus the detailed description will not be repeated here.

### <E. Second matching processing (answer content matching)>

Some specific methods of the second matching processing (answer content matching) included in the evaluation phase of Fig. 5 will be described below.

### (f1: Matching technique 1)

The number of matches (the number of overlaps) of answer content 334 to each question included in answer data set 330 may be evaluated as the technique of the second matching processing (answer content matching).

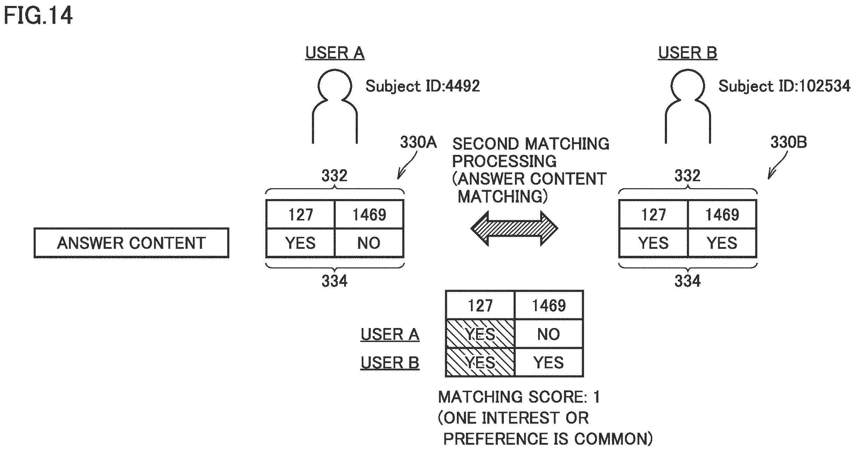

Fig. 14 is a view illustrating one technique of the second matching processing (answer content matching) in matching system 1 of the embodiment. With reference to Fig. 14, in the plurality of users, the number of matches (the number of overlaps) of answer contents 334 for each question included in answer data set 330 of each user is calculated as the matching score. The weight as described later may be adopted for the calculation of the matching score.

In the example of Fig. 14, it is assumed that two questions match (are common) between answer data set 330A obtained from user A (subject ID: 4492) and answer data set 330B obtained from user B (subject ID: 102534). Between answer data set 330A and answer data set 330B, the presence or absence of the match of answer content 334 for two common questions is evaluated.

In the example of Fig. 14, answer content 334 included in answer data set 330A is "yes" and "no", and answer content 334 included in answer data set 330B is "yes" and "yes". In this example, it can be seen that one answer content 334 matches (overlaps) between the two. Because one answer content 334 matches, the matching score can be calculated as "1".

When the matching score is "1", it can be estimated that one hobby, preference, personality, aptitude, interest, and the like are common between the target users.

The matching score in Fig. 14 can be calculated between arbitrary users. Although Fig. 14 illustrates the example of calculating the matching score between two users, the matching score may be calculated between at least three users.

Furthermore, based on the matching score calculated by the technique of the second matching processing (answer content matching) in Fig. 14, the adaptation degree with another user may be calculated for each user as illustrated in Figs. 11(A) and 11(B).

As the second determination condition described above, it is assumed that (1) the matching score is ranked high (for example, within the top 20), (2) the value of the calculated matching score exceeds a predetermined threshold, and (3) the calculated match rate exceeds a predetermined threshold.

### (f2: Matching technique 2)

The number of matches (the number of overlaps) of the category to which question ID 332 belongs may be evaluated instead of question ID 332 included in answer data set 330 as another technique of the second matching processing (answer content matching). That is, when each user selects different questions belonging to the same category, it can be estimated that the contact points exist with each other with category identity. Such the estimation based on the category identity means logical inference from the question from which the answer is obtained, based on the hierarchical structure of question set 300.

The details of the processing using the category to which question ID 332 belongs are similar to the processing described above in Figs. 12 and 13, and thus the detailed description will not be repeated here.

### (f3: Matching technique 3)

As still another method of the second matching processing (answer content matching), the matching score may be calculated based on the mapping (or, the feature amount or the feature vector) to the latent space calculated from answer content 334 for each question included in answer data set 330.

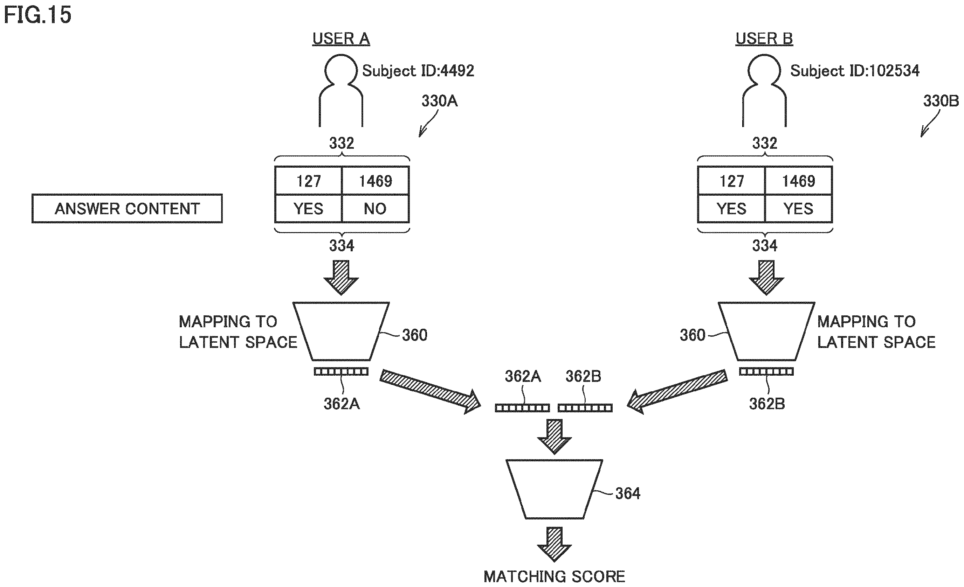

Fig. 15 is a view illustrating still another technique of the second matching processing (answer content matching) in matching system 1 of the embodiment. With reference to Fig. 15, the matching score may be calculated based on mapping 362 to the latent space calculated from answer content 334 for each question included in answer data set 330 of each user in the plurality of users.

In the example of Fig. 15, mapping 362A to the latent space is calculated by inputting answer content 334 for each question included in answer data set 330A obtained from user A (subject ID: 4492) to mapping model 360, and mapping 362B to the latent space is calculated by inputting answer content 334 for each question included in answer data set 330B obtained from user B (subject ID: 102534) to the mapping model 360.

Then, the matching score can be calculated by evaluating the similarity between mapping 362A to the latent space and mapping 362B to the latent space. For example, a collation model 364 may be used to calculate the matching score.

Mapping model 360 and collation model 364 can be generated or configured similarly to mapping model 350 and collation model 354 that are illustrated in Fig. 13. The learning data set in which the actual matching score (or, the degree of subjective satisfaction) is labeled for the set of the question and the answer may be used in the learning for generating mapping model 360 and collation model 364.

The matching score in Fig. 15 can be calculated between arbitrary users. Although Fig. 15 illustrates the example of calculating the matching score between two users, the matching score may be calculated between at least three users.

The evaluation result similar to that in Fig. 11 described above can be calculated also in the matching technique of Fig. 15. Because the content of the calculated evaluation result is substantially the same as the content described above, the detailed description will not be repeated.

Similarly, for the second determination condition described above, it is assumed that (1) the matching score is ranked high (for example, within the top 20), (2) the value of the calculated matching score exceeds a predetermined threshold, and (3) the calculated match rate exceeds a predetermined threshold.

### (f4: Matching technique 4)

The number of matches (the number of overlaps) of the category to which question ID 332 belongs instead of question ID 332 included in answer data set 330 may be evaluated in the technique of Fig. 15 as still another technique of the second matching processing (answer content matching). That is, when each user selects different questions belonging to the same category, it can be estimated that the contact points exist with each other with category identity. Such the estimation based on the category identity means logical inference from the question from which the answer is obtained, based on the hierarchical structure of question set 300.

The details of the processing using the category to which question ID 332 belongs are similar to the processing described above in Figs. 12 and 13, and thus the detailed description will not be repeated here.

### <G. Application examples>

Some application examples of the matching system of the embodiment will be described below.

### (g1: expert client type)

An expert client type system will be described as a first application example. The expert client type system is used in the case where the matching between appropriate persons is determined in providing service such as employment and diagnosis.

The system configuration in Fig. 2 is adopted in the expert client type, typically. First, an expert prepares question set 300 corresponding to the provided service. Then, all or a part of prepared question set 300 is distributed to the user.

The user selects and answers the question of interest in the questions included in distributed question set 300. The content of the answer selected by the user is transmitted to server 100.

Server 100 calculates the matching score by two-stage matching (selection question matching and answer content matching) as described above. Then, server 100 executes services such as the employment and the diagnosis based on the calculated matching score.

In the analysis based on the matching score, in addition to the method using the matching score calculated between the users, a representative persona pattern may be previously prepared, and a method for evaluating the similarity or the adaptation degree with each persona pattern may be adopted. When the similarity or the adaptation degree meets a predetermined condition, prescription or service according to the corresponding persona pattern may be provided.

### (g2: SNS (social networking service) type)

An SNS type system will be described as a second application example. The SNS type system is used when each user more easily finds connection with the target user.

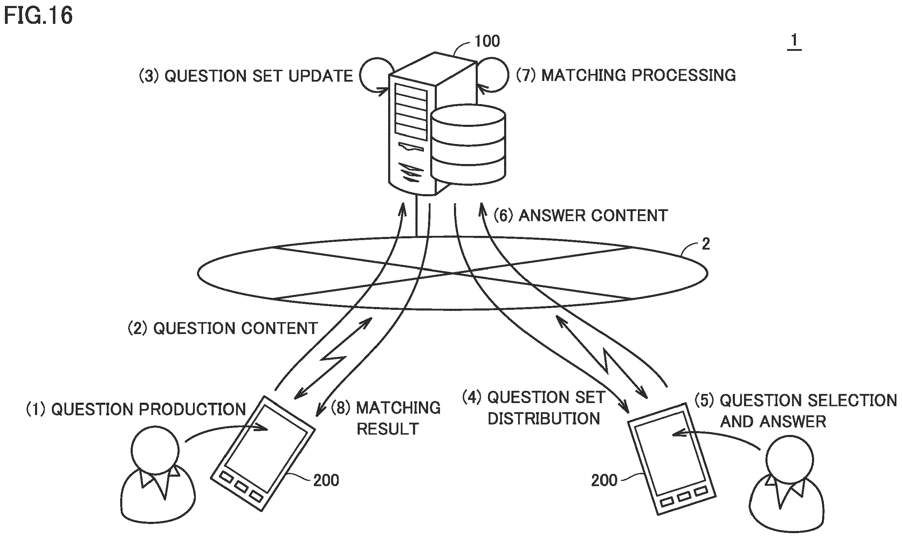

Fig. 16 is a schematic diagram illustrating another configuration example of matching system 1 of the embodiment. With reference to Fig. 16, each user produces the question according to the connection that the user wants to have ((1) question production). For example, the user who wants to be connected to another user who is interested in an animal produces the question such as "do you like cats?". The question produced by the user is transmitted from terminal device 200 to server 100 ((2) question content).

Server 100 analyzes the questions transmitted from terminal device 200, determines the category to which each question belongs, and updates question set 300 ((3) question set update).

Then, server 100 distributes all or a part of the updated question set to another user for each of one or more terminal devices 200 ((4) question set distribution). The user selects and answers the question of interest in the questions included in the distributed question set 300 ((5) question selection and answer). The content of the answer input from the user through each of terminal devices 200 is transmitted to server 100 ((6) answer content).

Server 100 calculates the matching score by the two-stage matching (selection question matching and answer content matching) as described above ((7) matching processing). Then, based on the calculated matching score, server 100 responds to the user who produces the question about the user indicating the high matching score as the matching result ((8) matching result). Thus, the user who produces the question can be connected to the user suitable for the purpose.

In the matching processing of server 100, both the selection question matching and the answer content matching may be performed, or only the selection question matching may be performed. For example, in the selection question matching, when another user answers the question produced by a certain user with interest, it can be inferred that the user is interested in the question of the same category even when the answer content is different. Accordingly, the matching score between the users who are interested in the question of the same category may be increased.

Furthermore, in the matching processing of server 100, the larger weight (or, the smaller weight) may be given to the specific question to calculate the matching score. Alternatively, the question to which the weight is given may be changed or the size of the given weight may be changed according to the user.

### (g3: Modification of SNS type)

Fig. 16 illustrates the configuration example in which the question set is distributed between terminal devices 200 through server 100. However, the question set may be directly distributed from one terminal device 200 to another terminal device 200. Such the direct distribution of the question set from terminal device 200 is effective, for example, in the case where a matching target candidate already exists for a certain user, and in the case where the actually matched user is determined from the candidates.

The present invention is not limited to the above-described case, but a system similar to peer to peer in which server 100 does not exist may be adopted.

### (g4: Artificial intelligence (AI) type)

An AI type system will be described as a third application example. In the AI-type system, instead of explicitly distributing the question set (or question) to the user, an autonomous interaction agent interacts with the user and includes one or more questions in the interaction with the user, thereby collecting the answer (the category of the question answered by the user and the answer content) from the user.

The autonomous interaction agent (or server 100) calculates the matching score by the two-stage matching (the selection question matching and the answer content matching) as described above. The service such as the employment and the diagnosis is executed based on the calculated matching score.

In the analysis based on the matching score, in addition to the method using the matching score calculated between the users, a representative persona pattern may be previously prepared, and a method for evaluating the similarity or the adaptation degree with each persona pattern may be adopted. When the similarity or the adaptation degree meets a predetermined condition, prescription or service according to the corresponding persona pattern may be provided.

### <H. Construction and update of question set 300>

An example of construction and update of question set 300 will be described below.

First, the question is collected by any method. For example, a method for referring to a known knowledge database, a method for collecting the question from an arbitrary user through the network, or the like is assumed. As illustrated in Fig. 16 described above, a method such as the production of the question by the user who wants to have some connection may be adopted.

Question set 300 is configured based on category tree 302 having the hierarchical structure of the plurality of categories, and may determine which category a newly added question belongs to.

For example, the similarity to the category (a character and the content) included in category tree 302 is evaluated while linguistic analysis is performed on the newly added question, whereby server 100 of matching system 1 may determine the category to which the newly added question belongs. An inference model configured by machine learning may be used for the language analysis.

Furthermore, the inference model configured by the machine learning may be used with the structure of category tree 302 and the content of the question added in the past as inputs and the category (which may be manually determined) in which the question added in the past is classified as teacher data of an inference result.

As described above, when accepting the question produced by the user, server 100 may automatically determine the category to which the received question belongs, and execute the update processing for updating question set 300. The question set can be configured at low cost by adopting such the configuration.

The plurality of questions may be combined into the single question based on the similarity between the newly added question and another question included in existing question set 300. For example, when a question "do you like cat?" and a question "do you like dog?" are included, they may be put together in a question "do you like animal?".

Alternatively, when the question "do you like cat?" and the question "do you like dog?" are included, only the question "do you like cat?" may be validated. In this case, a substitute question "do you like cat?" is added instead of the question "do you like dog?" itself.

Alternatively, the substitute question may be added to question set 300 instead of the newly added question itself. For example, when the question "do you like cat?" is added, a substitute question "do you like animal?" may be added instead of the question as it is.

For example, a sentence similarity discrimination model configured by the machine learning can be used for the processing for collecting such the question. BERT or the like may be used as the sentence similarity discrimination model. Whether the two questions are equivalent can be evaluated using the sentence similarity discrimination model. Two similar questions can be combined into one using such the evaluation result.

As described above, server 100 of matching system 1 may update question set 300 by collecting the added question and the question similar to the added question based on the similarity between the added question and another question. Alternatively, server 100 may update question set 300 with a representative question corresponding to the added question based on the similarity between the added question and another question.

Server 100 of matching system 1 may distribute question set 300 (one or the plurality of more questions) only to the user in which the category of the question matches a range of interest registered previously by the user or the estimated range of the interest. At this point, the range of the interest may be estimated from the answer content previously made by each user.

In addition, a mechanism for determining the user to which the question is distributed or a mechanism for determining the distributed question to the user with maximization of an answer rate as a target may be implemented by the machine learning. In this case, the feature amount such as the category to which the question belongs, an individual profile of the distribution destination user (which may include attribute information such as age and gender), a past answer situation of the distribution destination user, a potential adaptation degree between previously-prepared question set 300 and the distribution destination user, and the like may be used as the input to the inference model. The answer rate of each user may be output from the inference model.

The parameter of the inference model is optimized by the machine learning so as to maximize the answer rate of each user, whereby the learned model can be determined. The parameters of the determined learned model may be sequentially optimized (additionally learned) using a new answer situation from the user.

The user to be the distribution destination of question set 300 can be determined using the determined learned model. Alternatively, question set 300 corresponding to the user of the distribution destination can be determined using the determined learned model.

More efficient distribution of the question set 300 and the acquisition of answer can be implemented by adopting such the mechanism using the machine learning.

### <I. Modifications>

### (i1: Weight)

In the evaluation phase (the first matching processing (selection question matching) and/or the second matching processing (answer content matching)), an arbitrary weight related to the matching processing may be given to the question included in question set 300. Also in the evaluation phase (the first matching processing (selection question matching) and/or the second matching processing (answer content matching)), the weight related to the matching processing may be given to the answer acquired from the user.

As an example of the weight, the larger weight may be given to the newer question added to question set 300, and the smaller weight may be given to the older question. The smaller weight may be given to the new question depending on the purpose, purpose, or the like of the evaluation.

In addition, based on the time when the answer from the user is acquired, the larger weight may be given to the more recently acquired answer, and the smaller weight may be given to the older answer. The smaller weight may be given to the old question depending on the purpose, purpose, or the like of the evaluation.

In this manner, the weight related to the matching processing may be determined depending on the time of the target question or the time of the target answer.

The weight may be set based on the feature of the question included in question set 300 as another example of the weight related to the matching processing given to the question included in question set 300. When a fashion degree is adopted as an example of the features of the question, the larger weight may be given to the question with a lower fashion degree. By adopting such the configuration, the problem of the long tail can be alleviated, and the fairer matching system can be implemented.

The weight corresponding to the category to which each question belongs may be adopted as still another example of the weight related to the matching processing given to the question included in question set 300. For example, the larger weight may be given to the category that more strongly reflects the content of the matching of the evaluation target. In this case, after the influence on the matching result is evaluated for each category by the machine learning or the like, the weight may be determined according to the evaluation result.

The weight according to the number of answers of the question may be adopted as still another example of the weight related to the matching processing given to the question included in question set 300. For example, the question having more answers may be given the smaller weight. The smaller weight may be given to the question with the smaller number of answerers depending on the purpose or gist of the evaluation.

Furthermore, the user may be allowed to set an arbitrary priority. In this case, the weight corresponding to the set priority is given. In this manner, an arbitrary weight may be artificially set to question set 300.

The weight may be set based on the attribute of the user who answers question set 300 as another example of the weight related to the matching processing given to the answer acquired from the user. The larger weight may be given to the user belonging to a group determined to be in a weaker position (that is, the matching is difficult) as an example of the attribute of the user. By adopting such the configuration, the problem of the long tail can be alleviated, and the fairer matching system can be implemented. An important user, a newly registered user, or the like is also assumed as another example of the attribute of the user. That is, the larger weight may be given to the answer from the important user or the answer from the newly registered user.

In this manner, an arbitrary weight may be given to question set 300 and/or the answer, and applied to the matching processing.

### (i2: Logical inference)

As described above, for example, the logical inference includes processing for inferring information (answer) suitable for the matching processing from the acquired answer by referring to information included in the hierarchical structure of the question set. For example, the answer to another question can be inferred from the content of the answer to a certain question by a certain user by performing the logical inference. The first matching processing (selection question matching) and/or the second matching processing (answer content matching) can be executed with higher accuracy using the content actually answered by the user and the answer obtained by the inference.

Such the logical inference can be implemented by, for example, a technique for inferring the answer to another question belonging to the same category as the category of the question answered by a certain user based on the hierarchical structure of question set 300.

For example, when a certain user has answered "yes" to the question "do you like cat?", it can be inferred that the user will answer "yes" to the question "do you like animal?".

### (i3: Implementation form)

In the above description, an implementation example by a system including server 100 and one or more terminal devices 200 will be described as a typical example. However, any implementation form may be adopted. For example, server 100 may be in charge of all functions, or some of the functions provided by server 100 may be executed by terminal device 200.

Furthermore, server 100 does not need to be implemented by a single computer, but may be implemented by a plurality of computers connected to the network. In this case, server 100 may be implemented using a calculation resource called a cloud on the network.

The program executed by terminal device 200 may be installed in a form of being downloaded from an arbitrary data server in response to the request.

In the above description, an implementation example (software implementation) implementing the matching system of the embodiment by the processor executing the program is exemplified, but the present invention is not limited thereto, and some or all processes may be implemented using a hardwired circuit (hardware implementation). An application specific integrated circuit (ASIC), a field-programmable gate array (FPGA), or the like can be used as an example of the hardwired circuit.

### <J. Appendix>

The above embodiment includes the following technical ideas.

### [Configuration 1]

A matching system (1) including:
storage means (110) configured to hold a question set (300) including a plurality of questions (310);
acquisition means (S8, S16, S18) configured to present one or more questions included in the question set to a user and to acquire one or more answers to the presented questions from the user;
first matching processing means (S20) configured to execute first matching processing based on one or more questions answered by the user; and
second matching processing means (S22, S24) configured to execute second matching processing based on content of one or more answers included in the one or more answers from the user when a result of the first matching processing satisfies a first determination condition.

### [Configuration 2]

The matching system according to the configuration 1, in which the first matching processing means is configured to evaluate similarity between the one or more questions answered by the user and one or more questions answered by another user, and
the second matching processing means is configured to evaluate similarity between the content of the one or more answers included in the one or more answers from the user and the content of the one or more answers included in one or more answers from the other user.

### [Configuration 3]

The matching system according to the configuration 2, in which the first matching processing means is configured to extract another user in which the result of the first matching processing satisfies the first determination condition from among a plurality of the other users.

### [Configuration 4]

The matching system according to the configuration 3, in which the second matching processing means is configured to calculate a matching score (S24) for the extracted user by the first matching processing.

### [Configuration 5]

The matching system according to any one of the configurations 2 to 4, in which the first matching processing means is configured to evaluate the similarity based on a number of matched questions between the one or more questions answered by the user and the one or more questions answered by the other user.

### [Configuration 6]

The matching system according to any one of the configurations 2 to 4, in which the first matching processing means is configured to evaluate the similarity based on mapping to a latent space calculated from one or more questions answered by the user and mapping to a latent space calculated from one or more questions answered by another user.

### [Configuration 7]

The matching system according to any one of the configurations 1 to 6, in which the question set has a hierarchical structure, and
at least one of the first matching processing means and the second matching processing means is configured to perform logical inference from the question from which the answer is acquired, based on the hierarchical structure of the question set.

### [Configuration 8]

The matching system according to any one of the configurations 1 to 7, further including update means configured to receive the question produced by a user and to update the question set,
in which the question included in the question set is categorized by a category.

### [Configuration 9]

The matching system according to the configuration 8, in which the update means is configured to determine the category to which an added question belongs.

### [Configuration 10]

The matching system according to the configuration 8 or 9, in which the update means is configured to execute at least one of processing for updating the question set by collecting the added question and a question similar to the added question and processing for updating the question set with a representative question corresponding to the added question based on the similarity between the added question and another question.

### [Configuration 11]

The matching system according to any one of the configurations 8 to 10, in which the acquisition means is configured to distribute the question set only to the user in which the category of the question matches a range of interest previously registered by the user or an estimated range of interest.

### [Configuration 12]

The matching system according to the configuration 11, further including a learned model configured to determine the user to which the question is distributed or to determine the question delivered to the user so as to maximize an answer rate from the user.

### [Configuration 13]

The matching system according to any one of the configurations 1 to 12, in which at least one of the first matching processing means and the second matching processing means is configured to give a weight related to matching processing to the question included in the question set.

### [Configuration 14]

The matching system according to any one of the configurations 1 to 12, in which at least one of the first matching processing means and the second matching processing means is configured to give a weight related to matching processing to the answer acquired from the user.

### [Configuration 15]

The matching system according to the configuration 13 or 14, in which the weight related to the matching processing is determined depending on a time of a target question or a time of a target answer.

### [Configuration 16]

The matching system according to any one of the configurations 1 to 15, further including notification means configured to notify another user in which the result of the second matching processing satisfies a second determination condition as a matching result.

### [Configuration 17]

A matching method executed by a computer (100), the matching method including:
presenting (S8, S16, S18) one or more questions included in a question set (300) including a plurality of questions (310) to a user and acquiring one or more answers to the presented questions from the user;
executing (S20) first matching processing based on one or more questions answered by the user; and
executing (S22, S24) second matching processing based on content of one or more answers included in the one or more answers from the user when a result of the first matching processing satisfies a first determination condition.

### [Configuration 18]

A matching program (1104) causing a computer (100) to execute a matching method, the computer executing:
presenting (S8, S16, S18) one or more questions included in a question set (300) including a plurality of questions (310) to a user and acquiring one or more answers to the presented question from the user;
executing (S20) first matching processing based on the question answered by the user; and
executing (S22, S24) second matching processing based on content of one or more answers included in the one or more answers from the user when a result of the first matching processing satisfies a first determination condition.

### <K. Advantage>

The matching system and the matching method of the embodiment adopt two-stage matching including the first matching processing (selection question matching) based on the question answered by each user and the second matching processing (answer content matching) based on the content of the answer included in the answer from each user. Even in the case where the large number of users exist, the set of users having a high possibility of matching having a common hobby, preference, personality, aptitude, interest, and the like can be efficiently found by adopting such two-stage matching.

It should be considered that the disclosed embodiment is an example in all respects and not restrictive. The scope of the present invention is defined by not the above description, but the claims, and it is intended that all modifications within the meaning and scope of the claims are included in the present invention.

### REFERENCE SIGNS LIST

1: matching system, 2: network, 100: server, 102, 202: processor, 104, 204: main memory, 106, 206: input unit, 108, 208: display, 110, 210: storage, 112: optical drive, 114: storage medium, 116: network controller, 130, 230: processor bus, 200: terminal device, 212: camera, 214: microphone, 216: speaker, 218: wireless communication controller, 220: mobile communication controller, 300: question set, 302: category tree, 310, 310A, 310B, 310C: question, 330, 330A, 330B: answer data set, 332: question ID, 334, 334A, 334B, 334C: answer content, 336: category ID, 338: code, 340A, 340B: evaluation result, 342: reference user field, 344: high-ranking user field, 346: matching score field, 348: match rate field, 350, 360: mapping model, 352, 352A, 352B, 362, 362A, 362B: mapping, 354, 364: collation model, 1104: matching program, 2104: connection application program

## Claims

1. A matching system comprising:
storage means configured to hold a question set including a plurality of questions;
acquisition means configured to present one or more questions included in the question set to a user and to acquire one or more answers to the presented questions from the user;
first matching processing means configured to execute first matching processing based on one or more questions answered by the user; and
second matching processing means configured to execute second matching processing based on content of one or more answers included in the one or more answers from the user when a result of the first matching processing satisfies a first determination condition.

2. The matching system according to claim 1, wherein the first matching processing means is configured to evaluate similarity between the one or more questions answered by the user and one or more questions answered by another user, and
the second matching processing means is configured to evaluate similarity between the content of the one or more answers included in the one or more answers from the user and the content of one or more answers included in one or more answers from the other user.

3. The matching system according to claim 2, wherein the first matching processing means is configured to extract another user in which the result of the first matching processing satisfies the first determination condition from among a plurality of the other users.

4. The matching system according to claim 3, wherein the second matching processing means is configured to calculate a matching score for the extracted user by the first matching processing.

5. The matching system according to any one of claims 2 to 4, wherein the first matching processing means is configured to evaluate the similarity based on a number of matched questions between the one or more questions answered by the user and the one or more questions answered by the other user.

6. The matching system according to any one of claims 2 to 4, wherein the first matching processing means is configured to evaluate the similarity based on mapping to a latent space calculated from one or more questions answered by the user and mapping to a latent space calculated from one or more questions answered by another user.

7. The matching system according to any one of claims 1 to 6, wherein the question set has a hierarchical structure, and
at least one of the first matching processing means and the second matching processing means is configured to perform logical inference from the question from which the answer is acquired, based on the hierarchical structure of the question set.

8. The matching system according to any one of claims 1 to 7, further comprising update means configured to receive the question produced by a user and to update the question set,
wherein the question included in the question set is categorized by a category.

9. The matching system according to claim 8, wherein the update means is configured to determine the category to which an added question belongs.

10. The matching system according to claim 8 or 9, wherein the update means is configured to execute at least one of processing for updating the question set by collecting the added question and a question similar to the added question and processing for updating the question set with a representative question corresponding to the added question based on the similarity between the added question and another question.

11. The matching system according to any one of claims 8 to 10, wherein the acquisition means is configured to distribute the question set only to the user in which the category of the question matches a range of interest previously registered by the user or an estimated range of interest.

12. The matching system according to claim 11, further comprising a learned model configured to determine the user to which the question is distributed or to determine the question delivered to the user so as to maximize an answer rate from the user.

13. The matching system according to any one of claims 1 to 12, wherein at least one of the first matching processing means and the second matching processing means is configured to give a weight related to matching processing to the question included in the question set.

14. The matching system according to any one of claims 1 to 12, wherein at least one of the first matching processing means and the second matching processing means is configured to give a weight related to matching processing to the answer acquired from the user.

15. The matching system according to claim 13 or 14, wherein the weight related to the matching processing is determined depending on a time of a target question or a time of a target answer.

16. The matching system according to any one of claims 1 to 15, further comprising notification means configured to notify another user in which the result of the second matching processing satisfies a second determination condition as a matching result.

17. A matching method executed by a computer, the matching method comprising:
presenting one or more questions included in a question set including a plurality of questions to a user and acquiring one or more answers to the presented questions from the user;
executing first matching processing based on one or more questions answered by the user; and
executing second matching processing based on content of one or more answers included in the one or more answers from the user when a result of the first matching processing satisfies a first determination condition.

18. A matching program causing a computer to execute a matching method, the computer executing:
presenting one or more questions included in a question set including a plurality of questions to a user and acquiring one or more answers to the presented questions from the user;
executing first matching processing based on one or more questions answered by the user; and
executing second matching processing based on content of one or more answers included in the one or more answers from the user when a result of the first matching processing satisfies a first determination condition.
